# FASCICULE DE BREVET EUROPEEN

(11) **EP 0 401 086 B1**
(45) Date de publication et mention de la délivrance du brevet: **27.10.1993**
(21) Numéro de dépôt: 90401371.1
(22) Date de dépôt: 22.05.1990
(51) Int. Cl.: B60N 2/28

(54) **Siège pour enfant de largeur réglable**
In der Breite verstellbarer Kindersitz
Child's seat adjustable in width

(30) Priorité: 02.06.1989 FR 8907336
(43) Date de publication de la demande: 05.12.1990
(73) Titulaire: AMPAFRANCE S.A., F-92107 Boulogne-Billancourt Cedex (FR)
(72) Inventeur: Surot, Patrick, F-49300 Cholet (FR)
(74) Mandataire: Casalonga, Axel

(56) Documents cités:
- EP-A- 0 121 899
- DE-A- 3 031 581
- DE-U- 1 956 844
- DE-U- 8 325 796

## Description

La présente invention a pour objet un siège pour enfant pouvant notamment être posé et fixé sur un siège, tel qu'un siège de véhicule automobile.

Les sièges de ce type et en particulier les sièges de sécurité utilisés à l'heure actuelle dans les véhicules automobiles, comprennent un châssis, en général tubulaire, métallique, recouvert d'un rembourrage, incluant deux bords latéraux formant avec le siège une sorte de baquet qui retient l'enfant sur les côtés.

Ces sièges actuellement disponibles sur le marché présentent cependant l'inconvénient de n'être adaptés qu'à la morphologie générale d'un enfant dans une certaine tranche d'âge. De ce fait, un enfant plus petit ou de corpulence moins importante ou encore un enfant peu couvert, par exemple en été, ne se trouve pas convenablement maintenu dans son siège, en particulier latéralement. Au contraire, on constate qu'un enfant plus âgé ou plus couvert, par exemple en hiver dans un véhicule encore peu chauffé, n'a aucune liberté de mouvement.

Le modèle d'utilité allemand DE-U-8 325 796.9 (HAGENBAUMER) décrit un siège pour enfant destiné à être installé dans un véhicule automobile et présentant une largeur modifiable en fonction de la taille de l'enfant. La modification de la largeur est obtenue par l'introduction d'une ou plusieurs cales simplement posées à l'intérieur du siège.

L'invention a pour objet de permettre d'adapter le siège à la morphologie de l'enfant, à son âge et à son équipement vestimentaire en modifiant la largeur du siège simultanément dans la partie haute du dossier et dans la zone de soutien des jambes.
Tel qu'il est revendiqué, le siège pour l'enfant, qui peut en particulier être posé et fixé sur un siège de véhicule automobile, comprend un châssis recouvert d'un rembourrage et incluant deux montants latéraux définissant le dossier et un montant transversal définissant la zone d'appui-tête. Les deux montants latéraux présentent des prolongations repliées en formant un angle avec les montants latéraux de façon à définir la zone de soutien des jambes. Deux éléments de châssis latéraux forment avec le siège un baquet et sont articulés de façon à pouvoir modifier la largeur du baquet. Selon l'invention, les deux éléments de châssis latéraux sont articulés à la fois à leur extrémité supérieure et à leur extrémité inférieure en étant fixés sur des manchons capables de tourner par rapport aux montants latéraux et auxdites prolongations autour desquels ils sont montés.
Dans un mode de réalisation avantageux, chaque élément de châssis latéral peut présenter une portion supérieure protégeant la tête de l'enfant et une portion inférieure proche de l'horizontale jouant le rôle d'un accoudoir.

Il est possible de prévoir des moyens de blocage et de verrouillage des différents éléments de châssis latéraux en position extrême et dans les différentes positions intermédiaires.

Dans un mode de réalisation avantageux de l'invention, on peut également prévoir un organe de liaisons des éléments de châssis latéraux entre eux afin de synchroniser leur mouvenent. De cette manière, l'action sur un seul des éléments de châssis latéraux entraîne le mouvement de l'autre.

L'invention sera mieux comprise à l'étude de la description détaillée d'un mode de réalisation faite à titre d'exemple nullement limitatif et illustrée par les dessins annexés, sur lesquels :
la figure 1 est un vue schématique de côté d'un siège selon l'invention monté à l'intérieur d'un véhicule automobile et montrant la structure du châssis métallique à l'intérieur du rembourrage du siège;
la figure 2 est une vue en élévation du siège de la figure 1 montrant les éléments de châssis latéraux dans la position qu'ils occupent pour la largeur maximale du baquet; et
la figure 3 est une vue analogue à la figure 2 montrant la position des éléments de châssis latéraux correspondant à la largeur minimale du baquet.

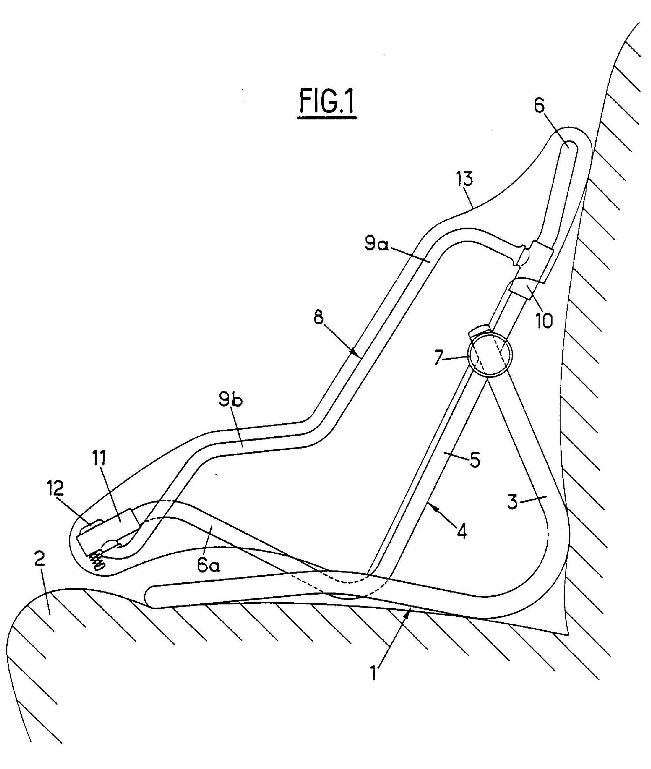

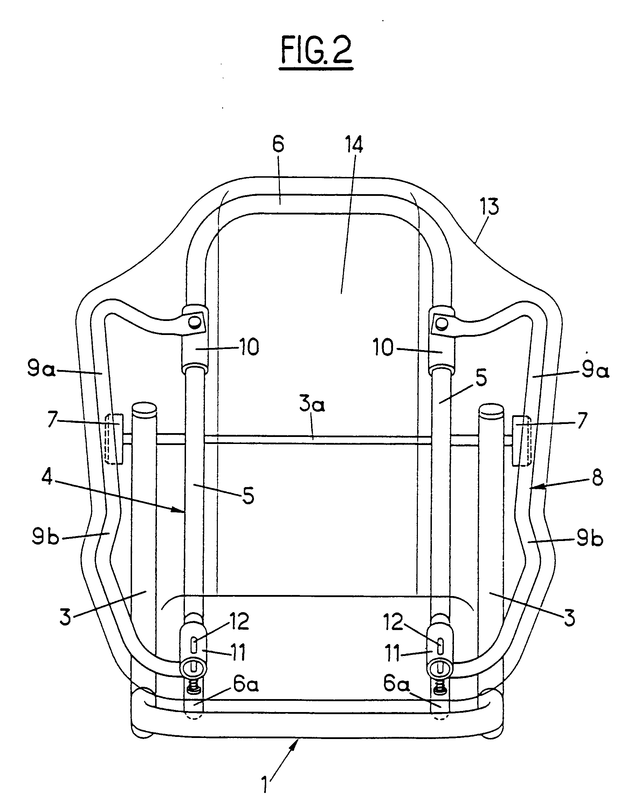

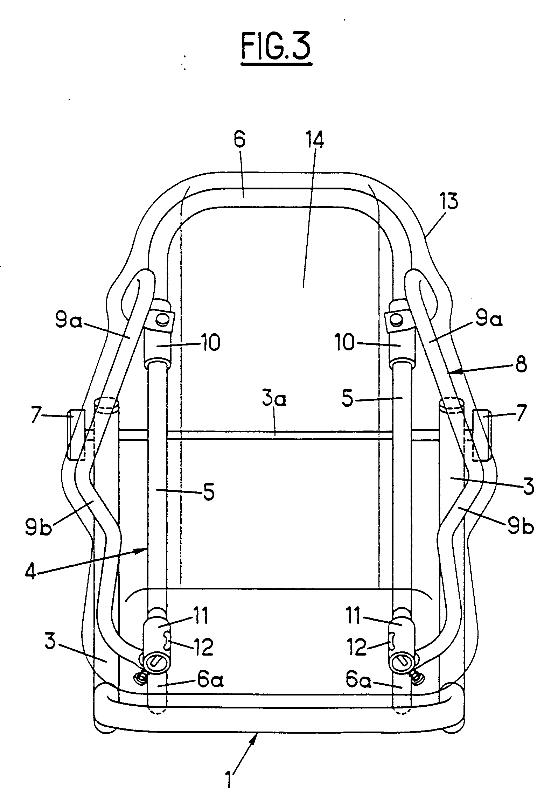

Tel qu'il est illustré sur les figures, le siège pour enfant, selon l'invention, comprend un support coudé 1 qui vient se poser et s'appuyer sur un siège principal, par exemple, un siège de véhicule automobile. Le support 1 présente une forme de fourche dont les deux branches 3 sont repliées vers le haut. Entre les deux branches 3 est monté un axe d'articulation 3a visible sur les figures 2 et 3, qui sert simultanément au montage du châssis du siège pour enfant référencé 4 dans son ensemble. Le châssis 4 comprend deux montants latéraux 5 parallèles définissant le dossier du siège, reliés entre eux par un montant transversal 6 définissant la zone d'appui-tête. Le siège proprement dit ainsi que la zone de soutien des jambes de l'enfant sont définis par les prolongations 6a repliées légèrement vers le haut des montants latéraux 5 (voir figure 1.).

L'ensemble du siège peut pivoter et sa position angulaire peut être réglée en agissant sur les molettes latérales 7 qui commandent l'orientation du siège par rapport à l'axe 3a.

Deux éléments de châssis latéraux identiques 8 définissent les bords latéraux du siège. Les éléments de châssis latéraux 8 présentent une portion supérieure 9a qui protège la tête de l'enfant à l'encontre de mouvements latéraux et une portion inférieure 9b proche de l'horizontale qui joue le rôle d'un accoudoir et protège l'enfant contre les mouvements latéraux dans la partie basse du siège.

Chaque élément de châssis latéral 8 est fixé dans sa partie haute sur un manchon 10 qui peut tourner autour du tube constituant le montant latéral 5. Dans sa partie inférieure, chaque élément de châssis latéral 8 est relié à un deuxième manchon 11 pouvant tourner autour de l'extrémité inférieure du montant latéral 6. Un doigt de blocage 12 assure individuellement le maintien dans différentes positions de l'élément de châssis latéral 8, en coopérant avec des perforations non illustrées sur les figures, pratiquées sur le tube 6.

Un rembourrage 13 dont le pourtour est indiqué en traits fins sur les figures, recouvre l'ensemble des éléments de châssis du siège incluant également les éléments de châssis latéraux 8. Comme on peut le voir sur les figures 2 et 3, le dossier du siège proprement dit 14 est défini entre les deux montants latéraux 5. La zone située entre le siège 14 et les éléments de châssis latéraux 8 définit, avec son rembourrage 13, la protection latérale du siège.

Si, en partant de la position illustrée sur la figure 2 qui correspond à la largeur maximale du baquet formé par le siège, on procède à une rotation des deux éléments de châssis latéraux 8 l'un vers l'autre, on aboutit à la position illustrée sur la figure 3 qui correspond au contraire à la largeur minimale du baquet. Dans cette position, les éléments de protection latéraux sont sensiblement perpendiculaires au plan du dossier 14, de sorte que la largeur du baquet est minimale et l'enfant se trouve étroitement maintenu entre les éléments de protection latéraux.

Si, toutefois, l'enfant est de corpulence plus importante, s'il est plus âgé, ou encore s'il est plus habillé, il suffit de faire tourner les deux éléments de châssis latéraux 8 dans le sens qui les éloigne l'un de l'autre pour revenir à la position de la figure 2 où le baquet adopte au contraire la largeur maximale.

On comprendra, bien entendu, que toutes les positions intermédiaires soient possibles et qu'il soit également possible et envisagé de relier entre eux par un organe approprié, les deux éléments de châssis latéraux, par exemple dans la partie de soutien des jambes du siège, de façon à synchroniser les mouvements relatifs des deux éléments de châssis latéraux 8.

Bien que l'invention ait été illustrée à partir d'un exemple d'un siège adaptable à un véhicule automobile, on comprendra que l'on puisse appliquer la même idée inventive à un siège pour enfant pouvant être adapté à un autre siège ou encore maintenu indépendant. Dans tous les cas, il sera possible d'adapter la largeur du siège à l'âge et à la morphologie de l'enfant.

## Revendications

1. Siège pour enfant, en particulier pouvant être posé et fixé sur un siège de véhicule automobile, comprenant un châssis recouvert d'un rembourrage et incluant deux montants latéraux (5) définissant le dossier, un montant transversal (6) définissant la zone d'appui-tête, les deux montants latéraux présentant des prolongations repliées (6a) en formant un angle avec les montants latéraux (5) de façon à définir la zone de soutien des jambes et deux éléments de châssis latéraux (8) formant avec le siège un baquet articulés de façon à pouvoir modifier la largeur du baquet, caractérisé par le fait que les deux éléments de châssis latéraux (8) sont articulés à la fois à leur extrémité supérieure et à leur extrémité inférieure en étant fixés sur des manchons (10, 11) capables de tourner par rapport aux montants latéraux (5) et aux dites prolongations (6a) autour desquels ils sont montés.

2. Siège selon la revendication 1, caractérisé par le fait que chaque élément de châssis latéral présente une portion supérieure (9a) protégeant la tête de l'enfant et une portion inférieure (9b) proche de l'horizontale jouant le rôle d'un accoudoir.

3. Siège pour enfant selon l'une quelconque des revendications précédentes, caractérisé par le fait que des moyens de blocage (12) sont prévus pour maintenir les éléments de châssis latéraux (8) en des positions extrêmes et intermédiaires.

4. Siège pour enfant selon l'une quelconque des revendications précédentes, caractérisé par le fait qu'il comprend en outre un organe de liaison des éléments de châssis latéraux entre eux afin de synchroniser leur mouvement.

## Patentansprüche

1. Kindersitz, der insbesondere auf einem Kraftfahrzeugsitz aufgestellt und fixiert werden kann, mit einem mit einer Polsterung überzogenen Gestell, das zwei die Rückenlehne definierende seitliche Stützen (5), eine die Kopfstütze definierende Querstrebe (6), wobei die beiden seitlichen Stützen über Verlängerungen (6a) verfügen, die jeweils unter Ausbildung eines Winkels mit den seitlichen Stützen derart abgebogen sind, daß sie den Abstützungsbereich für die Beine definieren, sowie zwei mit dem Sitz eine Schale bildende seitliche Gestellelemente (8) aufweist die derart angelenkt sind, daß die Breite der Schale verändert werden kann, dadurch gekennzeichnet, daß die beiden seitlichen Gestellelemente (8) sowohl an ihrem oberen Ende als auch an ihrem unteren Ende angelenkt sind, indem sie an Büchsen (10, 11) befestigt sind, die bezüglich der seitlichen Stützen (5) und der vorerwähnten Verlängerungen (6a) verdrehbar sind, die umgreifend sie angeordnet sind.

2. Kindersitz nach Anspruch 1, dadurch gekennzeichnet, daß jedes seitliche Gestellelement einen den Kopf des Kindes schützenden oberen Teil (9a) und einen die Funktion einer Armlehne übernehmenden unteren Teil (9b) nahe der Horizontalen aufweist.

3. Kindersitz nach einem der vorhergehenden Ansprüche, dadurch gekennzeichnet, daß Verriegelungsmittel (12) vorgesehen sind, um die seitlichen Gestellelemente (8) in End- und Zwischenstellungen zu halten.

4. Kindersitz nach einem der vorhergehenden Ansprüche, dadurch gekennzeichnet, daß er außerdem ein Glied zur Verbindung der seitlichen Gestellelemente miteinander aufweist, um deren Bewegung zu synchronisieren.

## Claims

1. Child seat, in particular capable of being fitted and fixed on an automobile vehicle seat, comprising a frame covered with an upholstery cover and including two side struts (5) defining the back, a transverse strut (6) defining the head rest zone, the two side struts comprising extensions (6a) bent to form an angle with the side struts (5) so as to define the leg support zone, and two side frame members (8) forming with the seat a bucket seat, articulated so as to be able to modify the width of the bucket seat, characterised in that the two side frame members (8) are articulated both at their upper end and at their lower end, being fixed to sleeves (10, 11) capable of rotating relative to the side struts (5) and to said extensions (6a) about which they are mounted.

2. Seat according to claim 1, characterised in that each side frame member (8) comprises an upper portion (9a) protecting the head of the child and a lower portion (9b) close to the horizontal acting as an arm rest.

3. Child seat according to any of the preceding claims, characterised in that blocking means (12) are provided for holding the side frame members (8) in end and intermediate positions.

4. Child seat according to any of the preceding claims, characterised in that it further comprises a member for connecting the side frame members to each other in order to synchronise the movement thereof.
